(19) Europäisches Patentamt
European Patent Office
Office européen des brevets

(11) EP 3 748 557 A1

(12) EUROPEAN PATENT APPLICATION
published in accordance with Art. 153(4) EPC

(43) Date of publication:
09.12.2020 Bulletin 2020/50

(51) Int Cl.:
$G06Q\ 10/06$ (2012.01)

(21) Application number: 19748321.7

(22) Date of filing: 15.01.2019

(86) International application number:
PCT/CN2019/071700

(87) International publication number:
WO 2019/149059 (08.08.2019 Gazette 2019/32)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.02.2018 CN 201810102192

(71) Applicant: ALIBABA GROUP HOLDING LIMITED
George Town, Grand Cayman (KY)

(72) Inventors:
• FU, Dapeng
  Hangzhou, Zhejiang 311121 (CN)
• ZHAO, Wenbiao
  Hangzhou, Zhejiang 311121 (CN)
• JIN, Hong
  Hangzhou, Zhejiang 311121 (CN)

(74) Representative: Bryn-Jacobsen, Caelia et al
Kilburn & Strode LLP
Lacon London
84 Theobalds Road
London WC1X 8NL (GB)

(54) **METHOD AND APPARATUS FOR DETERMINING DECISION STRATEGY CORRESPONDING TO SERVICE AND ELECTRONIC DEVICE**

(57) Disclosed in embodiments of the present application are a method, a device, and an electronic apparatus for determining a decision-making strategy corresponding to a service. The method comprises: determining a plurality of functions corresponding to the service, the plurality of functions being used to describe a relationship between a service parameter of the service and a risk assessment value of the service, and one function being used to characterize one decision-making strategy; determining the fitness levels of the plurality of functions, the fitness level of a function being used to characterize the similarity between a decision-making strategy evaluation value determined based on sample data and the function and a preset decision-making strategy evaluation value, the sample data including the service parameter and the risk assessment value; and determining a function corresponding to the service based on the fitness of the plurality of functions, wherein the function corresponding to the service is used to characterize the decision-making strategy corresponding to the service.

```
┌─────────────────────────────────────────────────┐
│ Determine a plurality of functions corresponding │
│ to the service, the plurality of functions being │
│ used to describe a relationship between a         │──〜 S102
│ service parameter of the service and a risk       │
│ assessment value of the service, and one function │
│ being used to characterize one decision-making    │
│ strategy                                          │
└─────────────────────────────────────────────────┘
                        │
                        ▼
┌─────────────────────────────────────────────────┐
│ Determine the fitness levels of the plurality of  │
│ functions, the fitness level of a function being  │
│ used to characterize the similarity between a     │
│ decision-making strategy evaluation value         │──〜 S104
│ determined based on sample data and the function  │
│ and a preset decision-making strategy evaluation  │
│ value, the sample data including the service      │
│ parameter and the risk assessment value           │
└─────────────────────────────────────────────────┘
                        │
                        ▼
┌─────────────────────────────────────────────────┐
│ Determine, based on the fitness levels of the     │
│ plurality of functions, a function corresponding  │
│ to the service, wherein the function corresponding│──〜 S106
│ to the service is used to characterize the        │
│ decision-making strategy corresponding to the     │
│ service                                           │
└─────────────────────────────────────────────────┘
```

Fig. 1

EP 3 748 557 A1

**Description**

**TECHNICAL FIELD**

The present application relates to the technical field of computers, and more specifically to a method, device and electronic apparatus for determining decision-making strategy corresponding to services.

**BACKGROUND**

A risk control system determines risks as identified according to a risk identification strategy, determines a suitable decision-making strategy, and recommends the determined decision-making strategy to the service side, so as to achieve a number of goals set by the services (e.g., the disturb rate and coverage rate), thereby realizing a more scientific management and control and providing better user experience.

Currently, the method employed by the risk control system to determine a decision-making strategy is normally to obtain a best solution that satisfies multiple goals such as the disturb rate and coverage rate in dimensions such as the amount and risk scores, so as to recommend threshold values of the amount and risk score that satisfy the multiple goals such as the disturb rate and coverage rate as a decision-making strategy to the service side, i.e., a point that satisfies multiple goals of the service on a multidimensional plane is identified as the decision-making strategy to be recommended to the service side. However, such a method is likely to be attempted by hackers from underground economy to discover the prevention and control threshold value, thereby initiating attacks and break-ins, thus causing risks and losses of assets.

Therefore, a method for determining a decision-making strategy corresponding to services is required, so as to overcome the above noted technical problems.

**SUMMARY**

The objective of the present application is to provide a method, device, and electronic apparatus for determining decision-making strategy corresponding to services, which can lower the service risks and reduce asset losses.

To solve the aforementioned technical problem, embodiments of the present application are implemented as follows:

In a first aspect, a method for determining a decision-making strategy corresponding to a service is provided, comprising:

determining a plurality of functions corresponding to the service, the plurality of functions being used to describe a relationship between a service parameter of the service and a risk assessment value of the service, and one function being used to characterize one decision-making strategy;

determining the fitness levels of the plurality of functions, the fitness level of a function being used to characterize the similarity between a decision-making strategy evaluation value determined based on sample data and the function and a preset decision-making strategy evaluation value, the sample data comprising the service parameter and the risk assessment value;

determining a function corresponding to the service based on the fitness levels of the plurality of functions, wherein the function corresponding to the service is used to characterize the decision-making strategy corresponding to the service.

In a second aspect, a device for determining a decision-making strategy corresponding to a service is provided, comprising:

a first determination unit, for determining a plurality of functions corresponding to the service, the plurality of functions being used to describe a relationship between a service parameter of the service and a risk assessment value of the service, and one function being used to characterize one decision-making strategy;

a second determination unit, for determining the fitness levels of the plurality of functions, the fitness level of a function being used to characterize the similarity between a decision-making strategy evaluation value determined based on sample data and the function and a preset decision-making strategy evaluation value, the sample data comprising the service parameter and the risk assessment value;

a third determination unit, for determining a function corresponding to the service based on the fitness levels of the plurality of functions, wherein the function corresponding to the service is used to characterize the decision-making strategy corresponding to the service.

In a third aspect, an electronic apparatus is provided, comprising:

a processor; and

a memory arranged to store computer-executable instructions, wherein when the executable instructions are executed, the processor is used to execute the following operations:

determining a plurality of functions corresponding to the service, the plurality of functions being used to describe a relationship between a service parameter of the service and a risk assessment value of the service, and one function being used to characterize one decision-making strategy;

determining the fitness levels of the plurality of functions, the fitness level of a function being used to characterize the similarity between a decision-making strategy evaluation value determined based on sample data and the function and a preset decision-making strategy evaluation value, the sample data comprising the service parameter and the risk assessment value;

determining a function corresponding to the service based on the fitness levels of the plurality of functions, wherein the function corresponding to the service is used to characterize the decision-making strategy corresponding to the service.

In a fourth aspect, a computer-readable medium is provided, wherein the computer-readable medium stores one or more programs, and when the one or more programs are executed by an electronic apparatus comprising a plurality of applications, the electronic apparatus is caused to execute the following operations:

determining a plurality of functions corresponding to the service, the plurality of functions being used to describe a relationship between a service parameter of the service and a risk assessment value of the service, and one function being used to characterize one decision-making strategy;

determining the fitness levels of the plurality of functions, the fitness level of a function being used to characterize the similarity between a decision-making strategy evaluation value determined based on sample data and the function and a preset decision-making strategy evaluation value, the sample data comprising the service parameter and the risk assessment value;

determining a function corresponding to the service based on the fitness levels of the plurality of functions, wherein the function corresponding to the service is used to characterize the decision-making strategy corresponding to the service.

Based on the above technical solution as provided by embodiments of the present application, the following is shown: after a plurality of functions that are used for describing the relationship between the service parameter of the service and the risk evaluation value are determined, then a functions corresponding to the service is determined according the fitness levels of the plurality of functions, and the function corresponding to the service is the decision-making strategy corresponding to the service. In view of the above, in the embodiments of the present application, the decision-making strategy recommended to the service side is a function describing the relationship between the service parameter and the risk evaluation value (or it could be understood as a curve), rather than a point of a threshold value, which can reduce the service risks and losses of assets caused by hackers from underground economy discovering the prevention and control threshold value.

## BRIEF DESCRIPTION OF THE DRAWINGS

In order to more clearly illustrate the technical solutions in embodiments of the present application or the prior art, the drawings to be used in the description of the embodiments or the prior art will be introduced briefly below. It is apparent that the drawings described below are merely some embodiments disclosed in the present application, and those of ordinary skill in the art also can obtain other drawings according to these drawings without making creative efforts.

FIG. 1 is a schematic flowchart of a method for determining a decision-making strategy corresponding to a service according to an embodiment of the present application.

FIG. 2 is a schematic flowchart of a method for determining a decision-making strategy corresponding to a service according to a specific embodiment of the present application.

FIG. 3 is a structural diagram of an electronic apparatus according to an embodiment of the present application.

FIG. 4 is a structural diagram of a device for determining a decision-making strategy according to an embodiment of the present application.

FIG. 5 is a schematic diagram of a risk control system according to an embodiment of the present application.

## DETAILED DESCRIPTION OF THE EMBODIMENTS

To enable those skilled in the art to better understand the technical solutions in the present application, the technical solutions in the embodiments of the present application will be described clearly and completely below with reference to the drawings in the embodiments of the present application. It is apparent that the described embodiments are merely some, rather than all of the embodiments of the present application. On the basis of the embodiments in the present application, all other embodiments obtained by those of ordinary skill in the art without making creative efforts should fall within the protection scope of the present application.

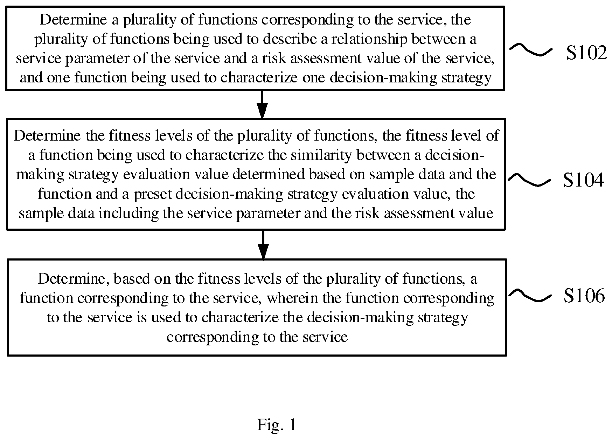

FIG. 1 is a flowchart of the method for determining decision-making strategy corresponding to a service of an embodiment of the present application. The method in Fig. 1 is implemented by a device for determining a decision-making strategy corresponding to a service.

As illustrated in Fig. 1, at S 102, a plurality of functions corresponding to the service are determined; the plurality of functions are used to describe a relationship between a service parameter of the service and a risk assessment value of the service, and one function is used to characterize one decision-making strategy.

Optionally, as an example, the service parameter for the service includes a transaction amount involved in the service, and the risk assessment value of the service includes a risk score or a risk assessment level, wherein the risk score or the risk assessment level may be a score or level obtained through an analysis of the service according to a risk assessment model. The risk assessment model may be obtained by training a deep learning model based on the training data, and the present application does not specify a deep learning model.

Optionally, as an example, the plurality of functions are a plurality of curve functions. Therefore, the decision-making strategy corresponding to the service is a curve function, or the decision-making strategy corresponding to the service is a curve. As the curve is smoother, it is easier to be understood and accepted on the service side, when compared with the method in which the decision-making strategy corresponding to the service is a threshold point.

Optionally, in some examples, determining a plurality of functions corresponding to the service comprises: determining a basic function corresponding to the service, wherein shape parameters for determining an image shape of the basic function are unknown values; determining a plurality of values of the shape parameters for determining the image shape of the basic function; and generating a plurality of functions based on the plurality of values of the shape parameters for determining the image shape of the basic function and the basic function.

In an embodiment of the present application, the basic function may be a function built in a device that determines the decision-making strategy corresponding to the service. Alternatively, the basic function can be a function that is customized by the risk control experts and introduced into the device that determines the decision-making strategy corresponding to the service, thus capable of better incorporating the experience of the risk control experts into the system decision-making process. Alternatively, the basic function can be a user-defined function. For example, the user can select or customize the basic function according to the scenario of the service (or it could be understood as a selection of the image shape of the basic function), thereby flexibly satisfying various kinds of scenarios in risk control services (for example, a low-risk-score high-amount scenario and a high-risk-score low-amount scenario).

For example, the basic function of the service is: $y=a/(1.42*math.exp(-b*(20-x))$, where y represents the transaction amount, x represents the risk score, and a and b are the shape parameters used to determine the image shape of the basic function. It is possible to determine multiple values of a and b, and substitute the multiple determined values of a and b into the basic function, thus obtaining multiple specific functions (it can be understood as the multiple functions in S102). For example, it can be determined that 4 values of a and b are (a1, b1), (a2, b2), (a3, b3), and (a4, b4), respectively; and substituting these 4 values into the basic function obtains 4 specific functions.

Specifically, in some practical implementations, when determining shape parameters for defining an image shape of the basic function, it is possible to determine multiple values of the shape parameters for defining the image shape of the basic function, based on a preset value range and/or a preset number of values. In the above example, the determined (a, b) values can be described as the initial population of solutions to the shape parameters.

In S104, the fitness levels of the plurality of functions are determined. The fitness of a function is used to characterize the similarity between the decision-making strategy evaluation value determined based on sample data and the function and a preset decision-making strategy evaluation value. The sample data includes the service parameter and the risk assessment value.

It can be understood that the sample data includes black sample data and white sample data. The black sample data can be understood as the data generated by law breakers when committing a crime, and the white sample data can be understood as the data generated by normal services.

Optionally, as an example, the preset decision-making strategy evaluation value includes a preset disturb rate and a preset coverage rate. In this case, the fitness level of the function is used to characterize the similarity between the disturb rate determined based on the sample data and the function and the preset disturb rate, and the similarity between the coverage rate determined based on sample data and the function and a preset coverage rate. It can be understood that, the similarity herein can be understood as the degree of proximity.

Specifically, in some examples, when determining the fitness level of a plurality of functions, the disturb rate and the coverage rate of the plurality of functions are calculated based on the sample data, and the fitness levels of the plurality of functions are determined based on the distance between the coordinate point of the disturb rate and the coverage rate of the plurality of functions in the target coordinate system and the coordinate points of the preset disturb rate and the preset coverage rate in the target coordinate system, where the axes of the target coordinate system respectively represent the disturb rate and the coverage rate. It can be understood that the horizontal coordinate of the target coordinate system represents the disturb rate, while the vertical coordinate represents the coverage rate, or the horizontal coordinate of the target coordinate system represents the coverage rate, and the vertical ordinate represents the disturb rate. Also, it can be considered that the closer the distance between the coordinate points is, the higher the fitness level of a function will be.

For example, when determining the disturb rate and coverage rate based on the sample data and a function, it can be calculated according to the following formula:

$$\text{disturb rate} = (\text{the number of white sample data on the curve of the function} + \text{the number of white sample data above the curve of the function}) / \text{the total number of white sample data};$$

$$\text{coverage rate} = (\text{the number of black sample data on the curve of the function} + \text{the number of black sample data above the curve of the function}) / \text{the total number of black sample data}.$$

In S106, a function corresponding to the service is determined based on the fitness levels of the plurality of functions, wherein the function corresponding to the service is used to characterize a decision-making strategy corresponding to the service.

It should be noted that the decision-making strategy corresponding to the service can also be understood as the risk-related decision-making strategy of the service.

Optionally, in some embodiments, when determining the function corresponding to the service based on the fitness levels of the plurality of functions, and when at least one target function exists in the plurality of functions, one of the at least one target function is determined as the function corresponding to the service. The fitness level of the at least one target function satisfies a preset fitness level requirement, and a difference between the decision-making strategy evaluation value determined based on the sample data and the at least one target function and the preset decision-making strategy evaluation value satisfies a preset difference requirement. Alternatively, it can be understood that the preset decision-making strategy evaluation value is actually a service goal that the decision-making strategy corresponding the service needs to satisfy, and the at least one target function is a function that satisfies the fitness level requirement and satisfies the service goal.

Further, when determining one of the at least one target function as the function corresponding to the service, a first target function of the at least one target function is determined as the function corresponding to the service, wherein the fitness level of the first target function is higher than the fitness levels of other functions in the at least one target function. In other words, the function that can best satisfy the service goal requirement in the at least one target function can be determined as the function corresponding to the service (a decision-making strategy corresponding to the service).

Optionally, as an example, the preset difference requirement includes: the disturb rate calculated based on the sample data and the function minus the preset disturb rate is less than or equal to 0. That is, the disturb rate calculated based on the sample data and the function should be smaller than or equal to the preset disturb rate. Also, the coverage rate calculated based on the sample data and the function minus the preset coverage rate is greater than or equal to 0. That is, the coverage rate calculated based on the sample data and the function should be greater than or equal to the preset coverage rate.

Optionally, in other examples, the method 100 shown in Fig. 1 further comprises: updating values of the shape parameters for determining image shapes in the plurality of functions when the at least one target function does not exist in the plurality of functions, to obtain a plurality of updated functions; determining the fitness levels of the plurality of updated functions, the fitness level of an updated function being used to characterize the similarity between the decision-making strategy evaluation value determined based on the sample data and the updated function and the preset decision-making strategy evaluation value; and determining a function corresponding to the service based on the fitness levels of the plurality of updated functions. Alternatively, it can be understood that if there is no function in the plurality of functions whose fitness level satisfies the fitness requirements, or if there are functions in the plurality of functions that satisfy the fitness requirements, but the difference between the decision-making strategy evaluation value calculated based on the sample data and the functions and the preset decision-making strategy evaluation value does not satisfy the preset difference requirement, then the plurality of functions need to be updated, to obtain a plurality of updated functions, and then the function corresponding to the service is determined based on the fitness levels of the updated functions.

Similarly, when determining a function corresponding to the service based on the fitness levels of the plurality of updated functions, if at least one target updated function exists in the plurality of updated functions, then one target updated function in the at least one target updated function is determined as the function corresponding to the service, wherein the fitness level of the at least one target updated function satisfies the preset fitness level requirement, and the difference between the decision-making strategy evaluation value calculated based on the sample data and the at least one updated function and the preset decision-making strategy evaluation value satisfies the preset difference requirement.

Further, when determining one of the at least one target updated function as the function corresponding to the service, a first target updated function of the at least one target updated function is determined as the function corresponding to the service, wherein the fitness level of the first target updated function is higher than the fitness level of other updated functions in the at least one target updated function. In other words, the updated function that can best satisfy the service goal requirement in the at least one target updated function can be determined as the function corresponding to the service (a decision-making strategy corresponding to the service).

In the embodiments of the present application, optionally, if the plurality of updated functions does not include at least one target updated function, and when updating the shape parameters of the plurality of functions for determining image shapes of the plurality of functions is an operation that updates the shape parameters for the last time, a second target updated function of the plurality of updated functions is determined as the function corresponding to the service, wherein the fitness level of the second target updated function is higher than the fitness levels of the other updated functions of the plurality of updated functions. In other words, if there is no updated function that satisfies the preset fitness level requirement in the updated functions obtained after the last update of the function, or there is an updated function in the plurality of functions that satisfies the fitness level requirement, but the difference between the decision-making strategy evaluation value calculated based on the sample data and these updated functions and the preset decision-making strategy evaluation value does not satisfy the preset difference requirement, then the function with the highest fitness level is determined as the functions corresponding to the service.

Alternatively, when the plurality of updated functions doe not include the at least one target updated function, and updating shape parameters for determining the image shapes of the plurality of functions is not an operation that updates the shape parameters for the last time, then updating values of shape parameters for determining image shapes of the plurality of updated functions in the plurality of updated functions, to obtain a plurality of re-updated functions; determining the fitness levels of the plurality of re-updated functions, the fitness level of a re-updated functions being used for characterizing the similarity between the decision-making strategy evaluation value determined based on the sample data and the re-updated function and the preset decision-making strategy evaluation value; and determining the function corresponding to the service, based on the fitness levels of the plurality of re-updated functions. In other words, if there is no updated function that satisfies the preset fitness level requirement in the updated functions obtained after updating the functions, or there is an updated function with a fitness level that satisfies the fitness level requirement in the plurality of functions, but the difference between the decision-making strategy evaluation value calculated based on the sample data and the updated function and the preset decision-making strategy evaluation value does not satisfy the preset difference requirement, and updating the functions is not an operation that updates for the last time, then the functions after updating can be updated again to obtain re-updated functions, and the function corresponding to the service can be determined based on the fitness levels of the re-updated functions.

In an example of the present application, optionally, when updating the shape parameters for determining the image shapes of the functions, the shape parameters for determining the image shapes of the different functions may be hybridized, to obtain the updated values of the shape parameters for determining the image shapes of the plurality of functions. For example, the values of the shape parameters a and b for determining the image shape of the function before executing the update operation include (a1, b1), (a2, b2), (a3, b3), and (a4, b4), the updated values of a and b obtained after the hybridization process include (a1+a2, b1+b2), (a2-al, b2-b1), (a3+a4, b3+b4), and (a4-a3, b4-b3). Alternatively, further, the values of a and b corresponding to the functions having high fitness levels among the 4 specific functions corresponding to (a1, b1), (a2, b2), (a3, b3), and (a4, b4) may be hybridized; for example, only (a1, b1) and (a2, b2) are hybridized to obtain updated values of a and b including (a1+a2, b1+b2) and (a1-a2, b1-b2).

In an example of the present application, optionally, when updating the shape parameters for determining the image shapes of the functions, the shape parameters for determining the image shapes of the different functions may be mutated, to obtain the updated values of the shape parameters for determining the image shapes of the plurality of functions. For example, the values of the shape parameters a and b for determining the image shapes of the functions before executing the update operation include (a1, b1), (a2, b2), (a3, b3), and (a4, b4), the updated values of a and b obtained after the mutation process include (a1+0.1, b1+0.1),(a2-0.1, b2-0.1),(a3+0.2, b3+0.2) and (a4-0.2, b4-0.2). Alternatively, further, the values of a and b corresponding to the functions having high fitness levels among the 4 specific functions corresponding to (a1, b1), (a2, b2), (a3, b3), and (a4, b4) may be hybridized; for example, only (a1, b1) and (a2, b2) are hybridized to obtain updated values of a and b including (a1+0.2, b1+0.2) and (a2-0.1, b2-0.2).

In an example of the present application, optionally, when updating the shape parameters for determining the image shapes of the functions, firstly the shape parameters for determining the image shapes of the different functions may be hybridized to obtain updated values of the shape parameters after the hybridization process, and then the updated values after the hybridization process are subject to mutation processing, to obtain updated values after the mutation processing, thereby realizing the updating of the functions by subjecting the shape parameters for determining the image shapes of the functions to hybridization and mutation.

It should be noted that, when the above method shown in Fig. 1 is described, it is described using a plurality of functions generated by a basic function. In practical applications, a plurality of basic functions may be selected, the rough shapes of the plurality of basic functions are different, and then a plurality of functions are generated based on each of the basic functions, and the method shown in Fig 1 is executed for a plurality of functions generated by one basic function. The execution of the method shown in Fig. 1 for a plurality of functions generated by different basic functions is executed in parallel, and then a decision-making strategy corresponding to the service is determined with respect to a basic function, and a plurality of decision-making strategies corresponding to the service may be determined with respect to the plurality of basic functions, and then the plurality of decision-making strategies are recommended to the service side.

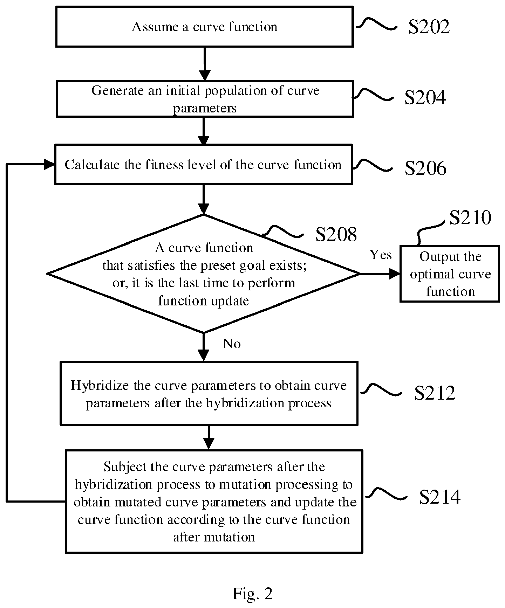

The method for determining a decision-making strategy corresponding to a service according to a specific embodiment of the present application will be described in detail below with reference to Fig. 2. The method as illustrated in Fig. 2 is implemented by a device for determining a decision-making strategy corresponding to a service.

As shown in Fig. 2, in S202, a curve function is assumed.

It should be noted that the parameters for determining the specific shape of the curve function in the curve function assumed in S202 is an unknown value.

Optionally, the assumption of the curve function can be performed according to the scenario of the service.

In S204, an initial population of the curve parameters is generated.

It can be understood that the curve parameters in S204 are parameters for determining a specific shape of the curve function, and generating the initial population of the curve parameters is actually generating values of a plurality of parameters for determining the specific shapes of the curve functions. For details, please refer to the method as illustrated in Fig. 1.

In S206, the fitness level of the curve function is calculated.

It should be noted that the meaning of the fitness level in S206 is the same as the meaning of the fitness level in the method as illustrated in Fig. 1, and for the method for calculating the fitness level, the method for determining the fitness level in the method as illustrated in Fig. 1 may be referred to, which is no longer repeated herein.

In S208, it is determined whether there is a curve function that satisfies the preset goal or whether it is the last time the function update operation is performed.

Optionally, in S208, the preset goal may include a preset fitness level requirement as well as a preset disturb rate and a preset coverage rate. In this case, firstly it may be determined as to whether the curve function satisfies the preset fitness level requirement, and if the preset fitness level requirement is satisfied, then it may be further determined whether the disturb rate calculated based on the curve function and the sample data is lower than or equal to the preset disturb rate, and whether the coverage rate calculated based on the curve function and the sample data is higher than or equal to the preset coverage rate.

In S210, if there is a curve function that satisfies the preset goal, or the function update is performed for the last time, then the optimal curve function is outputted.

It can be understood that the optimal curve function outputted in S210 refers to the curve function with the highest fitness level. In other words, the curve function with the highest fitness level is determined as the decision-making strategy corresponding to the service. If there is a curve function that satisfies the preset goal, the output optimal curve function is the curve function that best satisfies the preset goal, but if it is the last time to perform the function update, it means that there is no curve function that satisfies the preset goal in the curve functions obtained after the last function update is performed, and then outputting an optimal curve function can be understood as outputting the curve function with the highest fitness level in the current curve functions.

In S212, if there is no curve function that satisfies the preset goal and it is not the last time to perform the function update, then the curve parameters are hybridized to obtain the curve parameters after the hybridization process.

For the specific hybridization process, the method as illustrated in Fig. 1 may be referred to, which will not be repeated herein.

In S214, the curve parameters after the hybridization process are subject to mutation processing to obtain the curve parameters after the mutation processing, and the curve functions are updated according to the curve parameters after the mutation, and then S206 and subsequent steps are performed.

It can be understood that, after the initial population is generated, the initial population is substituted into the curve function to obtain a plurality of specific curve functions, and the fitness levels of the plurality of specific curve functions will be calculated in S206. After updating the curve functions in S214, the fitness levels of the plurality of update curve functions will be calculated in S206.

It should also be understood that in the method as illustrated in Fig. 2, it is possible that only the hybridization process is carried out with respect to the curve parameters to obtain the curve parameters after the hybridization processing, and the curve functions are updated according to the curve parameters after the hybridization processing, and then S206 and the subsequent steps are performed. Alternatively, it is possible that only the mutation processing is carried out with respect to the curve parameters to obtain the curve parameters after the mutation processing, and the curve functions are updated according to the curve parameters after the mutation processing, and then S206 and the subsequent steps are performed. Further, when the hybridization processing and the mutation processing need to be performed, the sequence of performing the hybridization processing and the mutation processing may be as illustrated in Fig. 2, wherein firstly the hybridization processing is performed and then the mutation processing is performed. Alternatively, mutation processing may be performed at first and then the hybridization processing is performed, which is not specified in the examples of the present application.

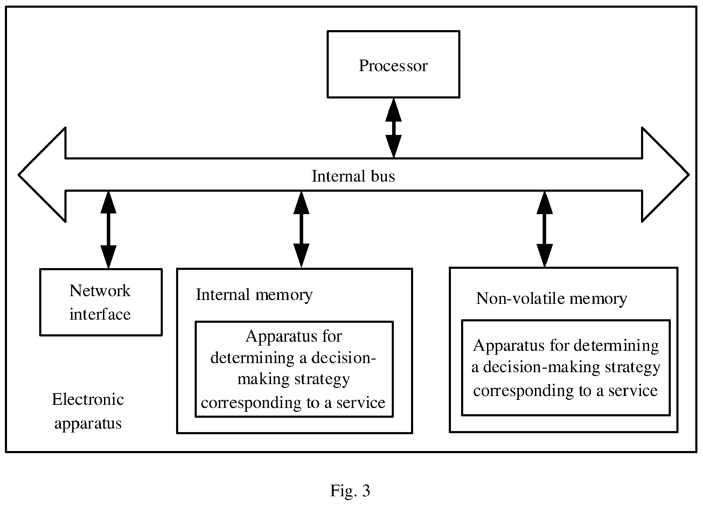

The method for determining a decision-making strategy corresponding to a service according to the embodiment of the present application is described in detail above with reference to FIG. 1 and Fig. 2. The electronic apparatus according to the embodiments of the present application is described in detail below with reference to FIG. 3. With reference to FIG. 3, at a hardware level, the electronic apparatus includes a processor, and optionally the electronic apparatus includes an internal bus, a network interface, and a memory. The memory may include an internal memory, such as a high-speed Random-Access Memory (RAM), and may further include a non-volatile memory, such as at least one magnetic disk memory. Certainly, the electronic apparatus may further include hardware required by other services.

The processor, the network interface, and the memory can be interconnected by the internal bus. The internal bus may be an Industry Standard Architecture (ISA) bus, a Peripheral Component Interconnection (PCI) bus, or an Extended Industry Standard Architecture (EISA) bus. The bus can be divided into an address bus, a data bus, a control bus, etc. For ease of illustration, only one bidirectional arrow is used as a representation in FIG. 3. However, it is not indicated that only one bus or one bus type is present.

The memory is used for storing a program. Specifically, the program may include program code including computer operation instructions. The memory can include the internal memory and the non-volatile memory, and provide instructions and data to the processor.

The processor reads a corresponding computer program from the non-volatile memory to the internal memory, executes the computer program, and forms a device for determining the decision-making strategy corresponding to a service at a logical level. The processor executes the program stored in the memory and is specifically used for executing the following operations:

determining a plurality of functions corresponding to the service, the plurality of functions being used to describe a relationship between a service parameter of the service and a risk assessment value of the service, and one function being used to characterize one decision-making strategy;

determining the fitness levels of the plurality of functions, the fitness level of a function being used to characterize the similarity between the decision-making strategy evaluation value determined based on sample data and the function and a preset decision-making strategy evaluation value, the sample data including the service parameter and the risk assessment value;

determining a function corresponding to the service based on the fitness levels of the plurality of functions, wherein the function corresponding to the service is used to characterize the decision-making strategy corresponding to the service.

The aforementioned methods executed by the device for determining the decision making strategy corresponding to a service disclosed in the embodiments shown in FIG. 1 and FIG. 2 of the present application may be applied to a processor, or may be implemented by a processor. The processor may be an integrated circuit chip and has a signal processing capability. In an implementation process, steps of the aforementioned methods can be implemented by a hardware integrated logic circuit in the processor or by instructions in the form of software. The processor can be a general-purpose processor, including a Central Processing Unit (CPU), a Network Processor (NP), etc.; or, the processor can be a Digital Signal Processor (DSP), an Application Specific Integrated Circuit (ASIC), a Field-Programmable Gate Array (FPGA), or another programmable logic apparatus, a discrete gate or a transistor logic apparatus, or a discrete hardware assembly. The methods, the steps, and logical block diagrams disclosed in the embodiments of the present application can be implemented or executed. The general-purpose processor may be a microprocessor, or the processor may be any conventional processor or the like. The steps of the methods disclosed with reference to the embodiments of the present application may be directly executed and completed by a hardware decoding processor, or may be executed and completed by a combination of hardware and software modules in a decoding processor. The software module may be located in a mature storage medium in the art, such as a random access memory, a flash memory, a read-only memory, a programmable read-only memory, an electrically erasable programmable memory, a register, or the like. The storage medium is located in the memory. The processor reads information in the memory, and completes the steps in the aforementioned methods in conjunction with hardware of the processor.

Certainly, in addition to the software implementation manner, the electronic apparatus of the present application does not exclude other implementation manners, such as logic apparatuses, a combination of software and hardware, etc. In other words, an execution entity of the following processing procedure is not limited to logic units, and may also be hardware or logic apparatuses.

The embodiments of the present application have also provided a computer-readable storage medium, wherein the computer-readable storage medium stores one or more programs, and such one or more programs include instructions. When the instructions are executed by an electronic apparatus comprising a plurality of applications, the electronic apparatus is caused to execute the method in the embodiments as shown in FIG. 1 and FIG. 2, and it is specifically used for executing the following methods:

determining a plurality of functions corresponding to the service, the plurality of functions being used to describe a relationship between a service parameter of the service and a risk assessment value of the service, and one function being used to characterize one decision-making strategy;

determining the fitness levels of the plurality of functions, the fitness level of a function being used to characterize the similarity between the decision-making strategy evaluation value determined based on sample data and the function and a preset decision-making strategy evaluation value, the sample data including the service parameter and the risk assessment value;

determining a function corresponding to the service based on the fitness levels of the plurality of functions, wherein the function corresponding to the service is used to characterize the decision-making strategy corresponding to the service.

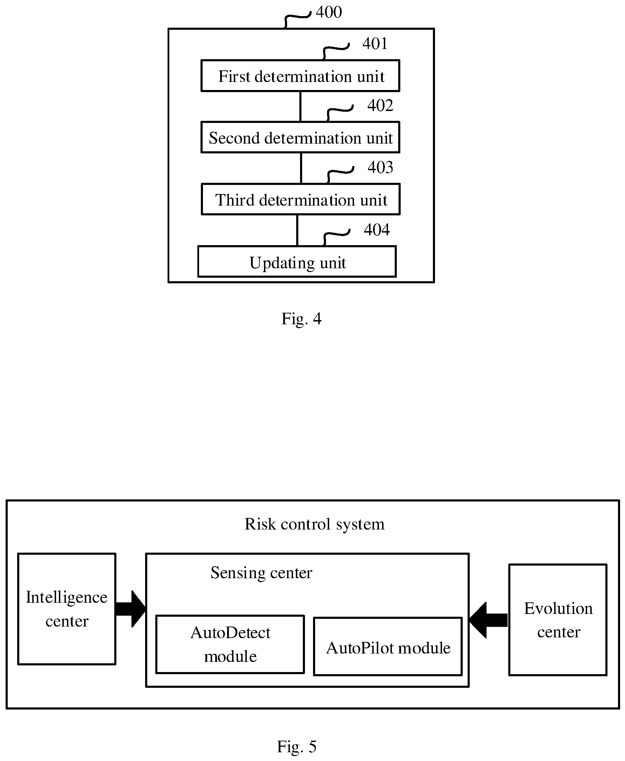

FIG. 4 is a schematic structural diagram of the device for determining a decision-making strategy corresponding to a service according to an embodiment of the present application. Referring to FIG. 4, in one software embodiment, device 400 for determining the decision-making strategy corresponding to a service may include: a first determination unit 401, a second determination unit 402, and a third determination unit 403, wherein,

the first determination unit 401 is for determining a plurality of functions corresponding to the service, the plurality of functions being used to describe a relationship between a service parameter of the service and a risk assessment value of the service, and one function being used to characterize one decision-making strategy;

the second determination unit 402 is for determining the fitness levels of the plurality of functions, the fitness level of a function being used to characterize the similarity between a decision-making strategy evaluation value determined based on sample data and the function and a preset decision-making strategy evaluation value, the sample data including the service parameter and the risk assessment value; and

the third determination unit 403 is for determining a function corresponding to the service based on the fitness levels of the plurality of functions, wherein the function corresponding to the service is used to characterize the decision-making strategy corresponding to the service.

For the device for determining a decision-making strategy corresponding to a service according to the embodiments of the present application, after a plurality of functions that are used for describing the relationship between the service parameter of the service and the risk evaluation value are determined, then a function corresponding to the service is determined according the fitness levels of the plurality of functions, and the functions corresponding to the service is the decision-making strategy corresponding to the service. In view of the above, in the embodiments of the present application, the decision-making strategy recommended to the service side is a function that describes the relationship between the service parameter and the risk evaluation value (or it could be understood as a curve), rather than a threshold value point, which can reduce the service risks and losses of assets caused by hackers from underground economy discovering the prevention and control threshold value.

Optionally, in one embodiment, the third determination unit 403:

when at least one target function exists in the plurality of functions, determines one of the at least one target function as the function corresponding to the service, wherein

the fitness level of the at least one target function satisfies a preset fitness level requirement, and a difference between the decision-making strategy evaluation value determined based on the sample data and the at least one target function and the preset decision-making strategy evaluation value satisfies the preset difference requirement.

Optionally, in one embodiment, the third determination unit 403:

determines a first target function of the at least one target function as the function corresponding to the service, wherein

the fitness level of the first target function is higher than the fitness levels of other target functions in the at least one target function.

Optionally, in one embodiment, and as shown in FIG. 4, the device 400 for determining a decision-making strategy corresponding to a service further includes an updating unit 404;
the updating unit 404 updates values of shape parameters of the plurality of functions for determining image shapes of the plurality of functions, to obtain a plurality of updated functions when the at least one target function does not exist in the plurality of functions;
the second determination unit 402 determines the fitness levels of the plurality of updated functions, the fitness level of an updated function being used to characterize the similarity between the decision-making strategy evaluation value determined based on the sample data and the updated function and the preset decision-making strategy evaluation value;
the third determination unit 403 determines a function corresponding to the service based on the fitness levels of the plurality of updated functions.

Optionally, in one embodiment, the third determination unit 403:

when at least one target updated function exists in the plurality of updated functions, determines one target updated function of the at least one target updated function as the function corresponding to the service, wherein
the fitness level of the at least one target updated function satisfies a preset fitness level requirement, and a difference between the decision-making strategy evaluation value determined based on the sample data and the at least one target updated function and the preset decision-making strategy evaluation value satisfies the preset difference requirement.

Optionally, in one embodiment, the third determination unit 403:

when the at least one target updated function does not exist in the plurality of updated functions, and updating the shape parameters of the plurality of functions for determining image shapes of the plurality of functions is an operation that updates the shape parameters for the last time, determines a second target updated function of the plurality of updated functions as the function corresponding to the service, wherein

the fitness level of the second target updated function is higher than the fitness levels of other updated functions of the plurality of updated functions.

Optionally, in one embodiment, the updating unit 404, when the at least one target updated function does not exist in the plurality of updated functions, and updating shape parameters of the plurality of functions for determining image shapes of the plurality of functions is not an operation that updates the shape parameters for the last time, updates values of shape parameters of the plurality of updated functions for determining image shapes of the plurality of updated functions, to obtain a plurality of re-updated functions;

the second determination unit 402 determines the fitness levels of the plurality of re-updated functions, the fitness level of a re-updated function being used to characterize the similarity between the decision-making strategy evaluation value determined based on the sample data and the re-updated function and the preset decision-making strategy evaluation value;

the third determination unit 403 determines a function corresponding to the service based on the fitness levels of the plurality of re-updated functions.

Optionally, in one embodiment, updating unit 404: subjects shape parameters for determining image shapes of different functions to hybridization processing, to obtain updated values of shape parameters for determining image shapes of the plurality of functions.

Optionally, in one embodiment, updating unit 404: subjects shape parameters for determining image shapes of different functions to mutation processing, to obtain updated values of shape parameters for determining image shapes of the plurality of functions.

Optionally, in one embodiment, the first determination unit 401:

determines a basic function for the service, wherein the shape parameters for determining the image shape of the basic function are unknown;

determines a plurality of values of the shape parameters for determining the image shape of the basic function;

generates the plurality of functions based on the plurality of values of the shape parameters used to determine the image shape of the basic function and the basic function.

Optionally, in one embodiment, the first determination unit 401, determines, based a preset value range and/or preset number of values, a plurality of values of the shape parameters for determining the image shape of the basic function.

Optionally, in one embodiment, the preset decision-making strategy evaluation value includes a preset disturb rate and a preset coverage rate, wherein the second determination unit 402:

determines a disturb rate and a coverage rate under the plurality of functions based on the sample data;

determines the fitness levels of the plurality of functions, based on the distance between the coordinate points of the disturb rate and coverage rate under the plurality of functions in the target coordinate system and the coordinate points of the preset disturb rate and preset coverage rate in the target coordinate system, with the axes of the target coordinate system respectively representing the disturb rate and the coverage rate.

Optionally, in one embodiment, the plurality of functions are a plurality of curve functions.

Device 400 for determining a decision-making strategy corresponding to a service can also execute the methods shown in FIG. 1 to FIG. 2, and implement the functions of the device for determining a decision-making strategy corresponding to a service in the embodiments shown in FIG. 1 to FIG. 2, which will not be repeated in the embodiments of the present application.

FIG. 5 is a schematic diagram of a risk control system according to one embodiment of the present application. The method shown in FIGS. 1 and 2 can be applied to the risk control system shown in FIG. 5. As shown in FIG. 5, the risk control system includes three modules: a sensing center, an intelligence center, and an evolution center. The sensing center is used to monitor, sense, alert and analyze risks based on big data, and through model intelligence analysis and artificial experience accumulation. The intelligence center comprises two modules: the AutoDetect module and the AutoPilot module, wherein the AutoDetect module can enhance the risk identification capability of the risk control system through intelligently recommending new identification strategies and new variables; the AutoPilot module can achieve, under a certain identification capability, more scientific management and control results and better user experience through intelligently adjusting the management and control strategies. The AutoPilot module can execute the method for determining the decision-making strategy corresponding to a service as shown in FIG. 1 and FIG. 2, and recommend decision-making strategies that can meet the service goal to the service side. The evolution center is a module that provides model self-learning, inputs new variables and validates performance for the intelligence center.

In summary, the above are merely preferable embodiments of the present application, and are not intended to limit the protection scope of the present application. Any modifications, equivalent substitutions, improvements and so on made within the spirit and principle of the present application shall fall within the protection scope of the present application.

The system, device, module, or unit illustrated in the aforementioned embodiments may be specifically implemented by a computer chip or an entity, or a product having a certain function. Atypical implementation apparatus is a computer. Specifically, the computer may be, for example, a personal computer, a laptop computer, a cell phone, a camera phone, a smart phone, a personal digital assistant, a media player, a navigation apparatus, an email apparatus, a game console, a tablet computer, a wearable apparatus, or a combination of any of these apparatuses.

The computer-readable medium includes permanent and non-permanent, movable and non-movable media that can achieve information storage by means of any methods or techniques. The information may be computer-readable instructions, data structures, modules of programs or other data. Examples of computer storage media include, but are not limited to, a phase change memory (PRAM), a static random access memory (SRAM), a dynamic random access memory (DRAM), other types of random access memories (RAMs), a read only memory (ROM), an electrically erasable programmable read-only memory (EEPROM), a flash memory or other memory technologies, a compact disk read-only memory (CD-ROM), a digital versatile disc (DVD) or other optical storage apparatuses, a cassette type magnetic tape, a magnetic tape/magnetic disk storage or other magnetic storage apparatuses or any other non-transmission medium, and may be used for storing information accessible by computing apparatuses. As defined herein, the computer-readable media do not include transitory media, such as modulated data signals and carriers.

It is also important to note that the terms "including", "comprising" or any other variant thereof are intended to cover non-exclusive inclusion, such that processes, methods, goods or apparatuses, including a series of elements, include not only those elements but also other elements not explicitly listed, or also include elements inherent to such processes, methods, goods or equipment. In the absence of more restrictions, the element defined by the statement "including one ..." does not exclude other identical elements in the process, method, commodity or equipment that includes the element.

Each embodiment of the present application is described in a progressive manner, and the same or similar sections between various embodiments are described with reference to each other, each of which is focused on the differences with other embodiments. Especially, the system embodiment is described relatively briefly because it is substantially similar to the method embodiments, and for related parts, reference may be made to the method embodiments.

## Claims

1. A method for determining a decision-making strategy corresponding to a service, comprising:

   determining a plurality of functions corresponding to the service, the plurality of functions being used to describe a relationship between a service parameter of the service and a risk assessment value of the service, and one function being used to characterize one decision-making strategy;
   determining fitness levels of the plurality of functions, a fitness level of a function being used to characterize a similarity between a decision-making strategy evaluation value determined based on sample data and the function and a preset decision-making strategy evaluation value, the sample data comprising the service parameter and the risk assessment value; and
   determining a function corresponding to the service based on the fitness levels of the plurality of functions, wherein the function corresponding to the service is used to characterize the decision-making strategy corresponding to the service.

2. The method according to Claim 1, wherein determining a function corresponding to the service based on the fitness levels of the plurality of functions comprises:

   when at least one target function exists in the plurality of functions, determining one of the at least one target function as the function corresponding to the service, wherein
   the fitness level of the at least one target function satisfies a preset fitness level requirement, and a difference between the decision-making strategy evaluation value determined based on the sample data and the at least one target function and the preset decision-making strategy evaluation value satisfies a preset difference requirement.

3. The method according to Claim 2, wherein determining one of the at least one target function as the function corresponding to the service comprises:

   determining a first target function of the at least one target function as the function corresponding to the service, wherein
the fitness level of the first target function is higher than the fitness levels of other target functions in the at least one target function.

4. The method according to Claim 2, further comprising:

when the at least one target function does not exist in the plurality of functions, updating values of shape parameters of the plurality of functions for determining image shapes of the plurality of functions, to obtain a plurality of updated functions;
determining the fitness levels of the plurality of updated functions, a fitness level of an updated function being used to characterize a similarity between the decision-making strategy evaluation value determined based on the sample data and the updated function and the preset decision-making strategy evaluation value; and
determining a function corresponding to the service based on the fitness levels of the plurality of updated functions.

5. The method according to Claim 4, wherein the determining a function corresponding to the service based on the fitness of the plurality of updated functions comprises:

when at least one target updated function exists in the plurality of updated functions, determining one target updated function of the at least one target updated function as the function corresponding to the service, wherein the fitness level of the at least one target updated function satisfies the preset fitness level requirement, and a difference between the decision-making strategy evaluation value determined based on the sample data and the at least one target updated function and the preset decision-making strategy evaluation value satisfies the preset difference requirement.

6. The method according to Claim 4, further comprising:

when the at least one target updated function does not exist in the plurality of updated functions, and updating shape parameters of the plurality of functions for determining image shapes of the plurality of functions is an operation that updates the shape parameters for the last time, determining a second target updated function of the plurality of updated functions as the function corresponding to the service, wherein
the fitness level of the second target updated function is higher than the fitness levels of other updated functions of the plurality of updated functions.

7. The method according to Claim 4, further comprising:

when the at least one target updated function does not exist in the plurality of updated functions, and updating shape parameters of the plurality of functions for determining image shapes of the plurality of functions is not an operation that updates the shape parameters for the last time, updating values of shape parameters of the plurality of updated functions for determining image shapes of the plurality of updated functions, to obtain a plurality of re-updated functions;
determining the fitness levels of the plurality of re-updated functions, the fitness level of a re-updated function being used to characterize a similarity between the decision-making strategy evaluation value determined based on the sample data and the re-updated function and the preset decision-making strategy evaluation value; and
determining a function corresponding to the service based on the fitness levels of the plurality of re-updated functions.

8. The method according to Claim 4, wherein updating the shape parameters of the plurality of functions for determining image shapes of the plurality of functions comprises:
subjecting the shape parameters for determining image shapes of different functions to hybridization processing, to obtain updated values of shape parameters for determining image shapes of the plurality of functions.

9. The method according to Claim 4 or 8, wherein updating the shape parameters of the plurality of functions for determining image shapes of the plurality of functions comprises:
subjecting shape parameters for determining image shapes of different functions to mutation processing, so as to obtain updated values of shape parameters for determining image shapes of the plurality of functions.

10. The method according to any one of Claims 1 to 8, wherein determining a plurality of functions corresponding to the service comprises:

determining a basic function corresponding to the service, wherein shape parameters for determining an image shape of the basic function are unknown,
determining a plurality of values of the shape parameters for determining the image shape of the basic function; and
generating a plurality of functions based on the plurality of values of the shape parameters for determining the image shape of the basic function and the basic function.

11. The method according to Claim 10, wherein determining a plurality of values of the shape parameters for determining the image shape of the basic function comprises:
determining, based on a preset value range and/or preset number of values, a plurality of values of the shape parameters for determining the image shape of the basic function.

12. The method according to any one of Claims 1 to 8, wherein the preset decision-making strategy evaluation value comprises a preset disturb rate and a preset coverage rate, and
determining the fitness levels of the plurality of functions comprises:

determining a disturb rate and a coverage rate under the plurality of functions based on the sample data; and
determining the fitness levels of the plurality of functions based on distances between coordinate points of the disturb rate and the coverage rate under the plurality of functions in the target coordinate system and coordinate points of a preset disturb rate and a present coverage rate in the target coordinate system, wherein axes of the target coordinate system respectively represent the disturb rate and the coverage rate.

13. The method according to any one of Claims 1 to 8, wherein the plurality of functions are a plurality of curve functions.

14. A device for determining a decision-making strategy corresponding to a service, comprising:

a first determination unit, for determining a plurality of functions corresponding to the service, the plurality of functions being used to describe a relationship between a service parameter of the service and a risk assessment value of the service, and one function being used to characterize one decision-making strategy;
a second determination unit, for determining fitness levels of the plurality of functions, a fitness of a function being used to characterize a similarity between a decision-making strategy evaluation value determined based on sample data and the function and a preset decision-making strategy evaluation value, the sample data comprising the service parameter and the risk assessment value; and
a third determination unit, for determining a function corresponding to the service based on the fitness levels of the plurality of functions, wherein the function corresponding to the service is used to characterize the decision-making strategy corresponding to the service.

15. An electronic apparatus, comprising:

a processor; and
a memory arranged to store computer-executable instructions, wherein when the executable instructions are executed, the processor is used to execute the following operations:

determining a plurality of functions corresponding to a service, the plurality of functions being used to describe a relationship between a service parameter of the service and a risk assessment value of the service, and one function being used to characterize one decision-making strategy;
determining fitness levels of the plurality of functions, a fitness level of a function being used to characterize a similarity between a decision-making strategy evaluation value determined based on sample data and the function and a preset decision-making strategy evaluation value, the sample data comprising the service parameter and the risk assessment value; and
determining a function corresponding to the service based on the fitness levels of the plurality of functions, wherein the function corresponding to the service is used to characterize the decision-making strategy corresponding to the service.

16. A computer-readable medium, wherein the computer-readable medium stores one or more programs, and when the one or more programs are executed by an electronic apparatus comprising a plurality of applications, the electronic apparatus is caused to execute the following operations:

determining a plurality of functions corresponding to a service, the plurality of functions being used to describe a relationship between a service parameter of the service and a risk assessment value of the service, and one function being used to characterize one decision-making strategy;

determining fitness levels of the plurality of functions, a fitness level of a function being used to characterize the similarity between a decision-making strategy evaluation value determined based on sample data and the function and a preset decision-making strategy evaluation value, the sample data comprising the service parameter and the risk assessment value; and

determining a function corresponding to the service based on the fitness levels of the plurality of functions, wherein the function corresponding to the service is used to characterize the decision-making strategy corresponding to the service.

| Determine a plurality of functions corresponding to the service, the plurality of functions being used to describe a relationship between a service parameter of the service and a risk assessment value of the service, and one function being used to characterize one decision-making strategy | ∿ S102 |

| Determine the fitness levels of the plurality of functions, the fitness level of a function being used to characterize the similarity between a decision-making strategy evaluation value determined based on sample data and the function and a preset decision-making strategy evaluation value, the sample data including the service parameter and the risk assessment value | ∿ S104 |

| Determine, based on the fitness levels of the plurality of functions, a function corresponding to the service, wherein the function corresponding to the service is used to characterize the decision-making strategy corresponding to the service | ∿ S106 |

Fig. 1

Assume a curve function ～ S202

Generate an initial population of curve parameters ～ S204

Calculate the fitness level of the curve function ～ S206

S208

A curve function that satisfies the preset goal exists; or, it is the last time to perform function update

Yes → Output the optimal curve function ～ S210

No

Hybridize the curve parameters to obtain curve parameters after the hybridization process ～ S212

Subject the curve parameters after the hybridization process to mutation processing to obtain mutated curve parameters and update the curve function according to the curve function after mutation ～ S214

Fig. 2

Processor

Internal bus

Network interface

Internal memory

Apparatus for determining a decision-making strategy corresponding to a service

Non-volatile memory

Apparatus for determining a decision-making strategy corresponding to a service

Electronic apparatus

Fig. 3

400

401

First determination unit

402

Second determination unit

403

Third determination unit

404

Updating unit

Fig. 4

Risk control system

Intelligence center

Sensing center

AutoDetect module

AutoPilot module

Evolution center

Fig. 5

## INTERNATIONAL SEARCH REPORT

| International application No. |
| --- |
| **PCT/CN2019/071700** |

**A. CLASSIFICATION OF SUBJECT MATTER**

G06Q 10/06(2012.01)i

According to International Patent Classification (IPC) or to both national classification and IPC

**B. FIELDS SEARCHED**

Minimum documentation searched (classification system followed by classification symbols)

G06Q; G06F

Documentation searched other than minimum documentation to the extent that such documents are included in the fields searched

Electronic data base consulted during the international search (name of data base and, where practicable, search terms used)

WPI; EPODOC; CNPAT; CNKI; IEEE: 业务, 交易, 事件, 风险, 估计, 评测, 控制, 决策, 函数, 模型, 适应度, 样本, business, event, risk, estimate, control, decision, function, module, adaptability, sample

**C. DOCUMENTS CONSIDERED TO BE RELEVANT**

| Category* | Citation of document, with indication, where appropriate, of the relevant passages | Relevant to claim No. |
| --- | --- | --- |
| X | CN 103310282 A (WANG, SHADI) 18 September 2013 (2013-09-18) description, pages 3, 4 and 6 | 1-16 |
| PX | CN 108446817 A (ALIBABA GROUP HOLDING LIMITED) 24 August 2018 (2018-08-24) claims 1-16 | 1-16 |
| A | CN 107368936 A (ALIBABA GROUP HOLDING LIMITED) 21 November 2017 (2017-11-21) entire document | 1-16 |
| A | CN 107392406 A (ALIBABA GROUP HOLDING LIMITED) 24 November 2017 (2017-11-24) entire document | 1-16 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 March 2019** | **17 April 2019** |

| Name and mailing address of the ISA/CN | Authorized officer |
| --- | --- |
| **National Intellectual Property Administration, PRC (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/071700**

| Patent document cited in search report | | | Publication date (day/month/year) | Patent family member(s) | | | Publication date (day/month/year) |
|---|---|---|---|---|---|---|---|
| CN | 103310282 | A | 18 September 2013 | None | | | |
| CN | 108446817 | A | 24 August 2018 | None | | | |
| CN | 107368936 | A | 21 November 2017 | None | | | |
| CN | 107392406 | A | 24 November 2017 | HK | 1247391 | A0 | 21 September 2018 |

Form PCT/ISA/210 (patent family annex) (January 2015)